# EUROPÄISCHE PATENTSCHRIFT

(11) **EP 2 147 498 B1**
(45) Veröffentlichungstag und Bekanntmachung des Hinweises auf die Patenterteilung: **24.02.2016**
(21) Anmeldenummer: 08718019.6
(22) Anmeldetag: 19.03.2008
(51) Int. Cl.: H02K 11/00

(54) **MOTORANORDNUNG MIT ELEKTRONISCHEM TRENNRELAIS-MODUL**
MOTOR ARRANGEMENT WITH AN ELECTRONIC ISOLATING RELAY MODULE
ENSEMBLE MOTEUR AVEC MODULE RELAIS DE DÉCONNEXION ÉLECTRONIQUE

(30) Priorität: 08.05.2007 DE 102007021491
(43) Veröffentlichungstag der Anmeldung: 27.01.2010
(73) Patentinhaber: Robert Bosch GmbH, 70442 Stuttgart (DE)
(72) Erfinder: BREUNING, Christian, 72622 Nuertingen (DE); GEINITZ, Eckart, 72793 Pfullingen (DE); VOEGELE, Georg, 72768 Reutlingen (DE); DILLMANN, Adolf, 72525 Muensingen (DE)
(86) Internationale Anmeldenummer: PCT/EP2008/053298
(87) Internationale Veröffentlichungsnummer: WO 2008/135309

(56) Entgegenhaltungen:
- EP-A- 0 561 587
- WO-A-01/65666
- WO-A-98/10971
- WO-A-03/099632
- US-A1- 2007 030 606

## Beschreibung

Die Erfindung betrifft eine Motoranordnung, insbesondere einen Servoantrieb für ein elektronisches Lenksystem, in dem ein Trennrelais-Modul zur Stromlos-Schaltung der Motorphasen vorgesehen ist.

Bei Servoantrieben, insbesondere bei elektronischen Lenksystemen, die z.B. einen Synchronmotor aufweisen, besteht im Falle eines Kurzschlusses der Motorphasen die Gefahr der Blockierung, sodass im oben genannten Beispiel das Fahrzeug unlenkbar werden könnte. Der Grund hierfür liegt darin, dass im Kurzschlussfall der Motor im Generatorbetrieb arbeitet, sodass ein Fahrzeuglenker dann zusätzlich zu den vollen Lenkkräften auf der Lenkachse noch gegen das Generatormoment des Synchronmotors arbeiten muss.

Die Motorphasen sind bei einem Synchronmotor häufig in einer Sternpunktschaltung verschaltet. Zur Vermeidung eines Generatorbetriebs im Kurzschlussfall einer Phase kann ein mechanisch oder elektronisch ausgebildetes Sternpunktrelais vorgesehen sein, das im Fehlerfall die Motorphasen am Sternpunkt voneinander trennt.

Ein typischer Mangel mechanischer Relais ist ihre geringere Ausfallssicherheit aufgrund mechanischer Ermüdung bzw. aufgrund blockierter Mechanikkomponenten, wodurch die Zuverlässigkeit des Trennens der Motorphasen eingeschränkt ist.

Eine Steigerung der Zuverlässigkeit wird durch die Verwendung elektronischer Relais ermöglicht. Damit dieses auch unter schwierigen Umfeldbedingungen verwendet werden kann, muss dieses in geeigneter Weise mit dem Motorsystem verbunden sein. Weiterhin weisen die in elektronischen Sternpunktrelais verwendeten Leistungstransistoren im Normalbetrieb eine Wärmeentwicklung auf, die ein geeignetes Design zum Gewährleisten der Wärmeabfuhr notwendig macht. Dadurch wird eine geeignete Aufbau- und Verbindungstechnik erforderlich.

Die Druckschrift WO 98/10971 offenbart ein elektrisch unterstützte Lenkhilfe, die ein Motorsystem umfasst. Das Motorsystem weist einen Elektromotor mit mehreren Phasenwicklungen auf, die als Sternpunktschaltung verschaltet sind. Die Phasen können in einem Fehlerfall an dem Sternpunkt mit Hilfe einer Schaltvorrichtung getrennt werden. Die Schaltvorrichtung ist an einem Gehäuseteil des Elektromotors angeordnet.

Die Druckschrift EP 0561 587 B1 offenbart einen Elektromotor mit zwei Kammern im Inneren eines Gehäuses, wobei ein Steuergerät in einer der Kammern angeordnet ist.

Es ist daher Aufgabe der vorliegenden Erfindung, ein Motorsystem, insbesondere für den Einsatz in einem elektronischen Lenksystem, zur Verfügung zu stellen, bei dem ein elektronisches Sternpunktrelais in vorteilhafter Weise integriert ist, niederohmig mit den Motorphasen verbunden werden kann und in besonderer Platz sparender Weise so angeordnet ist, dass weiterhin die Zuverlässigkeit und Ausfallsicherheit erhöht ist.

Diese Aufgabe wird durch das Motorsystem nach Anspruch 1 gelöst.

Weitere vorteilhafte Ausgestaltungen der Erfindung sind in den abhängigen Ansprüchen angegeben.

Gemäß einem Aspekt ist eine Motoranordnung, insbesondere zur Verwendung in einem elektronischen Lenksystem, vorgesehen. Die Motoranordnung umfasst einen mehrphasigen Motor in einem Motorgehäuse, ein Gehäuseelement, das ein Teil des Motorgehäuses bildet, sowie ein elektronisches Trennrelais-Modul, um in einem Fehlerfall eine oder mehrere Motorphasen stromlos zu schalten. Das Trennrelais-Modul ist an einer Seite des Gehäuseelementes im Gehäuseinneren angeordnet.

Die Motoranordnung sieht vor, ein elektronisches Trennrelais-Modul zur Abschaltung der Motorphasenstränge so anzuordnen, dass eine besonders kompakte Motoranordnung realisiert wird, die sich zum Einsatz in einem elektronischen Lenksystem besonders eignet. Dabei wird das Trennrelais-Modul im Gehäuseinneren an einem Gehäuseelement angeordnet, so dass das Trennrelais-Modul sowohl eine geeignete Wärmeableitung durch das Gehäuseelement erhält, als auch durch das Motorgehäuse vor Umgebungseinflüssen geschützt ist.

Erfindungsgemäß wird ein Kontaktführungselement vorgesehen sein, das nicht-leitend mit einem Durchgangsleiter vorgesehen ist und in eine Durchgangsöffnung des Gehäuseelementes reicht, um eine Kontaktierung zwischen einer Innenseite und Außenseite des Gehäuseelementes zu schaffen.

Weiterhin kann das Trennrelais-Modul auf einer Leiterplatte, insbesondere einer Keramik-Leiterplatte, angeordnet sein, die auf einer Erhebung, die auf einer ins Gehäuseinneren gerichteten Fläche des Gehäuseelementes ausgebildet ist, angeordnet ist.

Gemäß einer Ausführungsform ist das Trennrelais-Modul als Sternpunktrelais-Modul oder als Phasentrennrelais-Modul ausgebildet.

Das Kontaktführungselement kann weiterhin mit einem Schenkel ausgebildet sein, der sich zumindest teilweise an der Seite des Gehäuseelementes erstreckt, und ein Halteelement, insbesondere eine Nase, aufweist, das mit einem entsprechenden Haltelement, insbesondere einer Ausnehmung, zusammenwirkt, um das Kontaktführungselement zu halten.

Weiterhin kann auf einer gegenüberliegenden Seite des Gehäuseelementes ein Steuergerät vorgesehen sein, um den Betrieb des Motors und insbesondere des Trennrelais-Moduls zu steuern.

Gemäß einer Ausführungsform ist das Gehäuseelement flächig ausgebildet, um ein zylinderförmiges Gehäuseteil abzudecken.

Bevorzugte Ausführungsformen der Erfindung werden nachfolgend anhand der beigefügten Zeichnung näher erläutert. Es zeigen:
- Fig. 1: ein Schaltbild einer Motoranordnung mit drei Phasen, die in einer Sternschaltung mit einem Sternpunktrelais verschaltet sind;
- Fig. 2: eine perspektivische Ansicht eines SternpunktrelaisModul zum Einsatz in einer Motoranordnung gemäß einer Ausführungsform der Erfindung;
- Fig. 3: einen Querschnitt durch eine Motoranordnung eines Synchronmotors mit einem eingebauten Sternpunktrelais-Modul gemäß der Ausführungsform der vorliegenden Erfindung;
- Fig. 4: eine perspektivische Ansicht eines Ausschnitts eines Gehäuseelementes der Motoranordnung mit dem darauf angeordneten Sternpunktrelais-Modul gemäß einer Ausführungsform der Erfindung;
- Fig. 5: einen Querschnitt durch einen Abschnitt des Gehäuseelementes mit einem Durchkontaktierungselement zur Verbindung des Sternpunktrelais-Moduls mit einem Steuergerät zum Ansteuern des Motors in der Motoranordnung; und
- Fig. 6: ein Schaltbild einer Motoranordnung mit drei Phasen, die in einer Sternschaltung verschaltet sind und durch ein Phasentrennrelais-Modul stromlos geschaltet werden können.

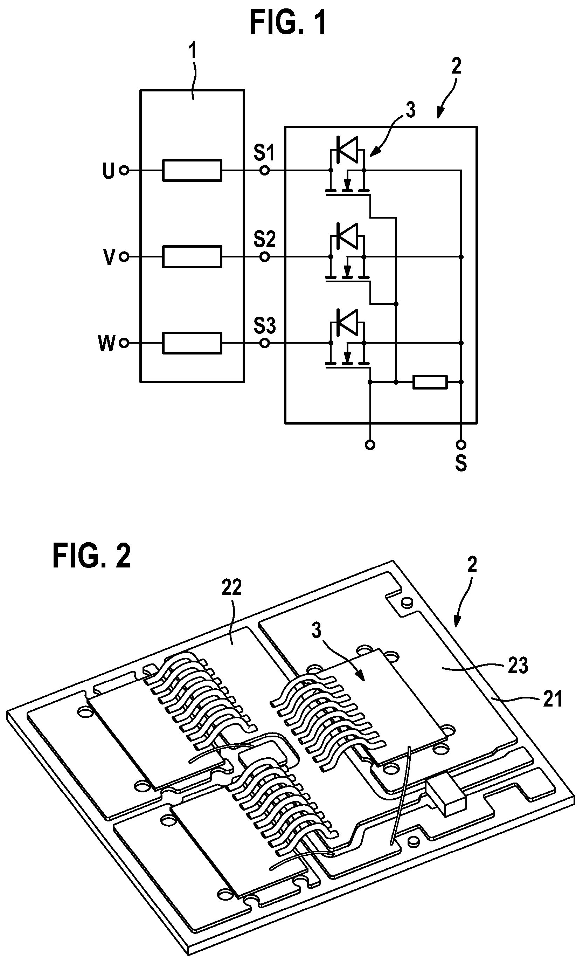

Fig. 1 zeigt ein Schaltbild, das die Verschaltung zwischen den Motorphasensträngen U, V, W eines Synchronmotors 1 mit einem Sternpunktrelais-Modul 2 darstellt. Jeder der Motorphasenstränge U, V, W ist über einen geeigneten Leistungsschalter 3, wie z.B. ein MOSFET, mit einem Sternpunkt S verbunden. Die Leistungsschalter 3 werden so betrieben, dass sie im Normalbetriebsfall des Motorsystems geschlossen sind, sodass die Motorphasenstränge U, V, W über den Sternpunkt S miteinander elektrisch verbunden sind.

Im Fehlerfall, z. B. bei einem Kurzschluss in einem der Motorphasenstränge U, V, W oder ähnlichem, werden die Leistungsschalter 3 geöffnet und somit die Motorphasenstränge U, V, W von dem Sternpunkt S getrennt. Dadurch wird der Stromfluss in den Motorphasensträngen unmittelbar unterbrochen und ein Bremsmoment des Synchronmotors bzw. ein Generatormoment kann vermieden werden, da die Motorphasenstränge sofort mit dem Öffnen der Leistungsschalter 3 stromlos geschaltet sind. Das Schalten der Leistungsschalter 3 wird mit Hilfe eines Ansteuersignals auf einer Steuerleitung vorgenommen, die bei einer Ausgestaltung mit MOSFETs mit deren Gate-Anschlüssen verbunden ist.

In Fig. 2 ist eine Ausführungsform eines Sternpunktrelais-Moduls 2 perspektivisch dargestellt. Das Sternpunktrelais-Modul 2 umfasst als eine Trägerplatte 21 ein Keramiksubstrat, auf dem Leiterbahnstrukturen als Kupferleiterbahnen 22 angeordnet sind. Die Kupferleiterbahnen 22 bilden die Anschlüsse zu den Motorphasensträngen U, V, W des Synchronmotors 1. Weiterhin wird auch der Sternpunkt S als Leiterfläche auf dem Keramiksubstart 21 ausgebildet. Auf der Trägerplatte 21 sind weitere Kupferflächen vorgesehen, auf denen die MOSFET 3 so angeordnet sind, dass eine möglichst gute Wärmeableitung von dem MOSFET 3 zu den Kupferflächen 23 möglich ist. Die Kontaktierung der MOSFETs 3 erfolgt zumindest teilweise von der den Kupferleiterbahnen 22 gegenüberliegenden Fläche der Trägerplatte 21 aus.

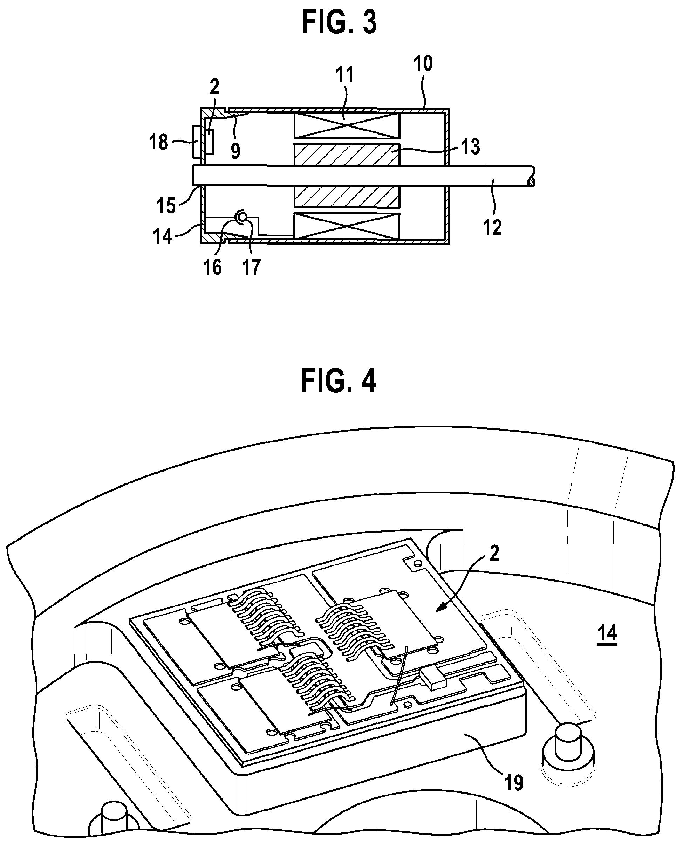

In Fig. 3 ist eine Querschnittsansicht einer Motoranordnung gemäß einer Ausführungsform der Erfindung dargestellt. Die Motoranordnung umfasst ein Motorgehäuse 10, das als zylindrische Hülse ausgebildet ist, an deren inneren Umfangsfläche Motorspulen angeordnet sind, um in bekannter Weise eine Motorachse 12 über die daran befindlichen Permanentrotormagnete 13 durch geeignete Ansteuerung anzutreiben. Die Motorachse 12 ragt an einem Ende des Motorgehäuses 10 heraus und dient als Motorabtrieb. An einem dem Motorabtrieb gegenüberliegenden Ende des Motorgehäuses 10 ist ein scheibenförmiges Gehäuseelement 14 vorgesehen, mit dem die entsprechende Seite des hülsenförmigen Motorgehäuses 10 verschlossen ist. Das Gehäuseelement 14 weist eine nach innen versetzte, im wesentlichen senkrecht von der Hauptfläche des Gehäuseelementes 14 abstehende, umlaufende Einschubkante 9 auf, die in das Innere des Motorgehäuses 10 geschoben wird, um das Gehäuseelement 14 am Motorgehäuse 10 zu positionieren. Das Gehäuseelement 14 weist eine Mittenöffnung 15 auf, durch die ein dem Abtrieb gegenüberliegendes Ende der Motorachse 12 ragt, die dadurch in der Mittenöffnung gelagert ist.

Eine in Richtung des Motorgehäuses 10 gerichtete Innenseite des Gehäuseelementes 14 ist mit einem Phasenstranganschluss 16 versehen, der im zusammengesetzten Zustand mit einem entsprechenden zweiten Phasenstranganschluss 17, der im Motorgehäuse 10 befestigt ist, verbunden ist, um so eine Kontaktierung der Motorphasenstränge U, V, W von außen über das Gehäuseelement 14 zu ermöglichen.

Das Sternpunktrelais-Modul 2 ist an der Innenseite des Gehäuseelementes 14 angeordnet und es ist somit möglich, das es kurze Verbindungsleitungen zu den Motorphasenstränge aufweist, sodass im Normalbetrieb, d.h. im geschlossenen Zustand der Leistungsschalter 3 möglichst niederohmige Verbindungen der Motorphasenstränge miteinander über den Sternpunkt S realisiert werden können.

Auf der der Innenseite gegenüberliegende Außenseite des Gehäuseelementes 14 ist vorzugsweise ein Steuergerät 18 vorgesehen, das die Steuerung des Synchronmotors in geeigneter Weise übernimmt. Bei einem Einsatz der Motoranordnung in einem elektronischen Lenksystem kann das Steuergerät weiterhin die dafür notwendigen Funktionen aufweisen.

In Fig. 4 ist ein Ausschnitt des Gehäuseelementes 14 perspektivisch dargestellt. Man erkennt dort, dass Sternpunktrelais-Modul 2 auf einem Sockel 19 des Gehäuseelementes 14 angeordnet ist. Der Sockel 19 ragt von einer Innenfläche des Gehäuseelementes 14 in das Motorinnere und bildet eine Fläche, an der das Sternpunktrelais-Modul 2 anliegt. Sockel 19 und Gehäuseelement 14 sind vorzugsweise einstückig ausgebildet und aus einem gut wärmeleitenden Material wie z.B. einem Metall, oder auch aus einem nicht leitenden Material wie z.B. einem Kunststoffmaterial gebildet. Das Sternpunktrelais-Modul 2 wird auf den Sockel 19 des Gehäuseelementes 14 vorzugsweise geklebt oder mit Hilfe von Befestigungselementen befestigt. Im letzteren Fall ist kann zwischen Sockel 19 und Gehäuseelement 14 eine Wärmeleitepaste vorgesehen sein.

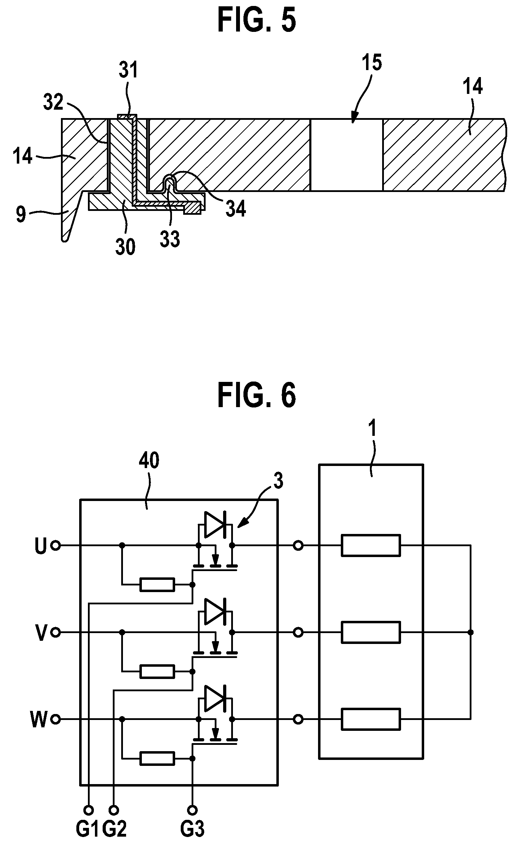

Wie in dem Ausschnitt des Gehäuseelementes der Fig. 5 gezeigt kann zur Realisierung der Durchkontaktierung für zumindest die Steuerleitung das Gehäuseelement 14 eine Durchgangsöffnung 32 aufweisen. Darin ist ein Kontaktführungselement 30 vorgesehen, das ein nicht leitendes Kunststoffelement oder ein Element aus einem anderen nicht-leitenden Material aufweist. In dem Kontaktführungselement 30 ist ein Durchgangsleiter 31 eingebettet. Der Durchgangsleiter 31 kann der Steuerleitung zum Ansteuern der Leistungsschalter 3 entsprechen und steht mit dem Sternpunktrelais-Modul 2 auf der Innenseite des Gehäuseelementes 14 und mit dem Steuergerät 18 an der Außenseite des Gehäuseelements 14 in Verbindung.

Das Kontaktführungselement 30 ist im wesentlichen T-förmig ausgebildet und von der Innenseite des Gehäuseelementes 14 so in die Durchgangsöffnung hindurch gesteckt, dass die Schenkel des Kontaktführungselementes 30 an der Innenseite des Gehäuseelementes 14 anliegen. Ein Schenkel des Kontaktführungselement 30 weist ein Nase 33 auf, die in eine Ausnehmung 34 an der Innenseite des Kontaktführungselementes 30 eingreift, um dieses zu fixieren.

Die Erfindung ist nicht darauf beschränkt, das Sternpunktrelais-Modul 2 an dem Gehäuseelement 14 vorzusehen, das als flächiger Abschluss des zylinderförmigen Motorgehäuses 10 vorgesehen ist. Bei anderen Motoranordnungen kann das Sternpunktrelais-Modul 2 an nahezu beliebiger Stelle innerhalb des Motorgehäuses angeordnet sein, so lange es die Funktion des Motors nicht beeinträchtigt. Durch die Anordnung des Sternpunktrelais-Moduls 2 in bzw. am Gehäuse der Motoranordnung kann auf zusätzliche Gehäusekomponenten zur sicheren Aufnahme des Sternpunktrelais-Moduls 2 verzichtet werden.

An Stelle des Sternpunktrelais-Moduls 2 kann wie in Fig. 6 gezeigt auch ein elektronisches Phasentrennrelaismodul 40 vorgesehen sein. Bei dieser Ausführungsform sind die Motorphasenstränge U, V, W des Synchronmotors 1 als Sternschaltung miteinander verbunden. Zwischen dem Steuergerät 18 und den Motorphasensträngen U, V, W sind die entsprechenden Leistungsschalter 3 des Phasentrennrelaismoduls 40 angeordnet, die im Normalbetriebsfall geschlossen sind. Jeder der Leistungsschalter 3 ist separat mit einer Steuerleitung angesteuert. Im Fehlerfall werden die Leistungsschalter 3 geöffnet, sodass durch die Motorphasenstränge kein Strom mehr fließen kann.

## Patentansprüche

1. Motoranordnung, insbesondere zur Verwendung in einem elektronischen Lenksystem, umfassend:
- einen mehrphasigen Motor (1) in einem Motorgehäuse (10);
- ein Gehäuseelement (14), das ein Teil des Motorgehäuses (10) bildet;
- ein elektronisches Trennrelais-Modul (2, 40), um in einem Fehlerfall eine oder mehrere Motorphasen stromlos zu schalten, **dadurch gekennzeichnet, dass** das Trennrelais-Modul (2, 40) an einer Innenseite des Gehäuseelementes (14) im Gehäuseinneren des Motorgehäuses (10) angeordnet ist,
und dass
ein Kontaktführungselement (30) vorgesehen ist, das nichtleitend mit einem Durchgangsleiter (31) versehen ist und in eine Durchgangsöffnung (32) des Gehäuseelementes (14) reicht, um eine Kontaktierung zwischen einer Innenseite und Außenseite des Gehäuseelementes (14) zu schaffen, und dass der Durchgangsleiter (31) das Trennrelais-Modul (2; 40) auf der Innenseite des Gehäuseelements (14) und ein Steuergerät (18) an der gegenüberliegenden Außenseite des Gehäuseelements (14) miteinander verbindet, wobei das Steuergerät (18) vorgesehen ist , um den Betrieb des Motors (1) und des Trennrelais-Moduls (2, 40) zu steuern.

2. Motoranordnung nach Anspruch 1, **dadurch gekennzeichnet, dass** das Trennrelais-Modul (2, 40) auf einer Leiterplatte (21), insbesondere einer Keramik-Leiterplatte, angeordnet ist, die auf einer Erhebung (19), die auf einer ins Gehäuseinneren gerichteten Fläche des Gehäuseelementes (14) ausgebildet ist, angeordnet ist.

3. Motoranordnung nach Anspruch 1 oder 2, **dadurch gekennzeichnet, dass** das Trennrelais-Modul (2, 40) als Sternpunktrelais-Modul oder als Phasentrennrelais-Modul ausgebildet ist.

4. Motoranordnung nach einem der Ansprüche 1 bis 3, **dadurch gekennzeichnet, dass** das Kontaktführungselement (30) mit einem Schenkel ausgebildet ist, der sich zumindest teilweise an der Seite des Gehäuseelementes (14) erstreckt, und ein Halteelement (33), insbesondere eine Nase, aufweist, das mit einem entsprechenden Haltelement (34), insbesondere einer Ausnehmung, zusammenwirkt, um das Kontaktführungselement (30) zu halten.

5. Motoranordnung nach einem der Ansprüche 1 bis 4, **dadurch gekennzeichnet, dass** das Gehäuseelement (14) flächig ausgebildet ist, um ein zylinderförmiges Gehäuseteil (10) abzudecken.

6. Verwendung der Motoranordnung nach einem der Ansprüche 1 bis 5 in einem elektronischen Lenksystem.

## Claims

1. Motor arrangement, in particular for use in an electronic steering system, comprising:
- a multi-phase motor (1) in a motor housing (10);
- a housing element (14) which forms part of the motor housing (10);
- an electronic isolating relay module (2, 40) in order to switch one or more motor phases to a currentless state in the event of a fault,
**characterized in that** the isolating relay module (2, 40) is arranged on an inner side of the housing element (14) in the interior of the motor housing (10),
and **in that** a contact-guiding element (30) is provided which is provided in a non-conductive fashion with a through-conductor (31) and extends into a through-opening (32) in the housing element (14) in order to form contact between an inner side and an outer side of the housing element (14), and **in that** the through-conductor (31) connects the isolating relay module (2; 40) on the inner side of the housing element (14) and a control unit (18) on the opposite outer side of the housing element (14) to one another, wherein the control unit (18) is provided to control the operation of the motor (1) and of the isolating relay module (2, 40).

2. Motor arrangement according to Claim 1, **characterized in that** the isolating relay module (2, 40) is arranged on a printed circuit board (21), in particular on a ceramic printed circuit board, which is arranged on an elevated portion (19) which is formed on a surface of the housing element (14) directed into the interior of the housing.

3. Motor arrangement according to Claim 1 or 2, **characterized in that** the isolating relay module (2, 40) is embodied as a star point relay module or as a phase isolating relay module.

4. Motor arrangement according to one of Claims 1 to 3, **characterized in that** the contact-guiding element (30) is embodied with a limb which extends at least partially on the side of the housing element (14) and has a securing element (33), in particular a projection, which interacts with a corresponding securing element (34), in particular a recess, in order to secure the contact-guiding element (30).

5. Motor arrangement according to one of Claims 1 to 4, **characterized in that** the housing element (14) is embodied in a planar fashion in order to cover a cylindrical housing part (10).

6. Use of the motor arrangement according to one of Claims 1 to 5 in an electronic steering system.

## Revendications

1. Ensemble moteur, en particulier à utiliser dans un système de direction électronique, comprenant:
- un moteur polyphasé (1), dans un boîtier de moteur (10) ;
- un élément de boîtier (14), qui forme une partie du boîtier de moteur (10);
- un module relais de déconnexion électronique (2, 40), pour commuter en cas de panne une ou plusieurs phase(s) du moteur sans courant,
**caractérisé en ce que** le module relais de déconnexion (2, 40) est disposé sur un côté intérieur de l'élément de boîtier (14) à l'intérieur du boîtier de moteur (10), et **en ce qu'**il est prévu un élément de guidage de contact (30), qui est muni de façon non conductrice d'un conducteur de passage (31) et qui arrive dans une ouverture de passage (32) de l'élément de boîtier (14), afin de créer un contact entre un côté intérieur et un côté extérieur de l'élément de boîtier (14), et **en ce que** le conducteur de passage (31) relie l'un à l'autre le module relais de déconnexion (2; 40) sur le côté intérieur de l'élément de boîtier (14) et un appareil de commande (18) sur le côté extérieur opposé de l'élément de boîtier (14), dans lequel l'appareil de commande (18) est prévu pour commander le fonctionnement du moteur (1) et du module relais de déconnexion (2, 40).

2. Ensemble moteur selon la revendication 1, **caractérisé en ce que** le module relais de déconnexion (2, 40) est disposé sur une plaquette de circuits imprimés (21), en particulier une plaquette de circuits imprimés en céramique, qui est disposée sur une surélévation (19), qui est formée sur une face de l'élément de boîtier (14) orientée vers l'intérieur du boîtier.

3. Ensemble moteur selon la revendication 1 ou 2, **caractérisé en ce que** le module relais de déconnexion (2, 40) se présente sous la forme d'un module relais avec point étoile ou d'un module relais de déconnexion de phase.

4. Ensemble moteur selon l'une quelconque des revendications 1 à 3, **caractérisé en ce que** l'élément de guidage de contact (30) est configuré avec une branche, qui s'étend au moins partiellement sur le côté de l'élément de boîtier (14), et qui présente un élément de maintien (33), en particulier un ergot, qui coopère avec un élément de maintien correspondant (34), en particulier un évidement, afin de maintenir l'élément de guidage de contact (30).

5. Ensemble moteur selon l'une quelconque des revendications 1 à 4, **caractérisé en ce que** l'élément de boîtier (14) est de forme plate, afin de recouvrir une partie de boîtier cylindrique (10).

6. Utilisation de l'ensemble moteur selon l'une quelconque des revendications 1 à 5 dans un système de direction électronique.
